# EUROPEAN PATENT APPLICATION

(11) **EP 4 644 740 A1**
(43) Date of publication of application: **05.11.2025**
(21) Application number: 22969525.9
(22) Date of filing: 27.12.2022
(51) Int. Cl.: F16K 5/02

(54) **ECCENTRIC NOISE-REDUCTION TWO-WAY CHECK VALVE**

(71) Applicant: ZF Commercial Vehicle Systems (Qingdao) Co., Ltd., Qingdao, Shandong 266510 (CN); ZF CV Systems Europe BV, 1170 Brüssel (BE)
(72) Inventor: SUN, Chao, Jinan, Shandong 250100 (CN); CHAMOT, Marcin, 54-611 Wroclaw (PL)
(74) Representative: Bremer, Ulrich
(86) International application number: PCT/CN2022/142373
(87) International publication number: WO 2024/138368

(57) **Abstract**

The present invention provides an eccentric noise-reduction two-way check valve, comprising: a housing (1); an eccentric valve body (3) which is mounted in the housing (1) and comprises a push element fixing seat (31); and a push element (4) mounted on the push element fixing seat (31) and constructed to push the eccentric valve body (3) in a direction in which the two-way check valve is closed, wherein the push element fixing seat (31) is arranged to be eccentric relative to the housing (1). The present invention can quickly eliminate abnormal noise with lower costs, without adding additional parts.

## Description

### Technical Field

The present invention relates to a valve, and in particular to a two-way check valve.

### Background Art

The conventional two-way check valve has the following problems under the customers' requirements for noise and under related environmental regulations: there is a loud and sharp whistling sound during operation (e.g., when a handbrake is released from a vehicle), which cannot satisfy the customer's requirements and the requirements of the relevant regulations. The noise is caused by resonance between the two-way check valve and an air flow.

Although the existing solution can solve the problem of abnormal noise, its structure is complex, and has the disadvantages of a low qualification rate and a high cost in an actual production process, which cannot meet the increasing market demand for products.

The existing solution is a solution mainly used when customers have special requirements for bypass functions, which has the following problems:
1. For most cases where this special function is not needed, the product cost pressure is high.
2. The housing needs slender and complex deep-hole machining, which has high requirements for tools and machining process; and it is impossible to carry out 100% detection, has a high failure rate, and is easy to cause reworking, wastes of manpower and material resources and an increase in product costs.
3. The structure includes up to 16 parts and has high requirements for the assembly process; and in case of a quality problem, it is not easy to find the faulty part.

### Summary

In view of this, an object of the present invention is to provide an eccentric noise-reduction two-way check valve with a simple structure, which realizes the change in natural frequency and airflow state of the two-way check valve by simply changing the structure of a valve body, thus avoiding resonance with airflow in a working state, and solving the problem of abnormal noise.

An eccentric noise-reduction two-way check valve according to an embodiment of the present invention includes: a housing; an eccentric valve body mounted in the housing, the eccentric valve body including a push element fixing seat; and a push element, the push element being mounted on the push element fixing seat, and the push element being constructed to push the eccentric valve body in a direction in which the two-way check valve is closed, where the push element fixing seat is arranged to be eccentric relative to the housing.

According to the present invention, the natural frequency of the two-way check valve is changed due to a certain eccentric distance between the push element fixing seat of the eccentric valve body and the housing. When the two-way check valve is opened, the eccentric valve body is subjected to the action of air pressure to compress the push element by force. Moreover, due to a certain eccentric distance between the push element fixing seat of the eccentric valve body and the housing, the push element, in addition to being compressed by an axial action, is also subjected to bending under the action of a bending moment. The bending of the push element causes a central axis of the push element fixing seat of the eccentric valve body to form an included angle with a central axis (or line of force) of the housing, thereby changing the path and flow rate of air passing through the two-way check valve and realizing the change in airflow state of the two-way check valve. The change in natural frequency and airflow state of the two-way check valve reliably avoids abnormal noise caused by the resonance with the airflow in the working state. Compared with the existing solution, the present invention can quickly eliminate abnormal noise with lower costs, without adding additional parts.

Optionally, the two-way check valve includes a valve seal disposed between the eccentric valve body and the housing. The valve seal includes, but is not limited to, an O-ring.

Optionally, the two-way check valve includes a housing insert disposed in the housing.

Optionally, the two-way check valve includes a valve seal disposed between the eccentric valve body and the housing insert. The valve seal includes, but is not limited to, an O-ring.

Optionally, the two-way check valve includes an insert seal disposed between the housing and the housing insert. The insert seal includes, but is not limited to, an O-ring.

Optionally, the eccentric valve body includes a guide seat used for guiding in the housing.

Optionally, the eccentric valve body includes a sealing structure between the guide seat and the push element fixing seat. The sealing structure includes, but is not limited to, being constructed as a groove to fit with the valve seal.

Optionally, the push element fixing seat includes a hollow portion.

Optionally, the cross-sectional shape of the push element fixing seat includes, but is not limited to, a circle, an oval, a quincunx, a polygon, etc.

Optionally, the cross-sectional shape of the guide seat includes, but is not limited to, a Y shape, a cross, a quincunx, etc.

Optionally, the push element is a spring.

The number of the insert seals may be 1. Preferably, the number of the insert seals is 2 or more.

Optionally, the two-way check valve is used in a vehicle brake system.

Further effects of the above non-conventional optional methods will be described below in conjunction with specific implementations.

### Brief Description of the Drawings

The accompanying drawings are used to better understand the present invention and do not constitute an improper limitation of the present invention. In the drawings:
Fig. 1 is a sectional view of an eccentric noise-reduction two-way check valve according to an embodiment of the present invention;
Fig. 2 is a structural schematic diagram of an eccentric valve body of the two-way check valve according to an embodiment of the present invention;
Fig. 3 is a schematic diagram of the cross-sectional shape of a push element fixing seat of the eccentric valve body of the two-way check valve according to an embodiment of the present invention; and
Fig. 4 is a schematic diagram of the cross-sectional shape of a guide seat of the eccentric valve body of the two-way check valve according to an embodiment of the present invention.

### List of reference signs

1: Housing
2: Valve seal
3: Eccentric valve body
4: Push element
5: Insert seal
6: Housing insert
31: Push element fixing seat
32: Sealing structure
33: Guide seat

### Detailed Description of Embodiments

Exemplary embodiments of the present invention are described below with reference to the accompanying drawings. Various details of the embodiments of the present invention are included to facilitate understanding and should be considered exemplary only. Accordingly, it should be appreciated by those of ordinary skill in the art that various changes and modifications can be made to the embodiments described herein without departing from the scope and spirit of the present invention. Likewise, descriptions of well-known functions and structures are omitted from the following description for clarity and conciseness.

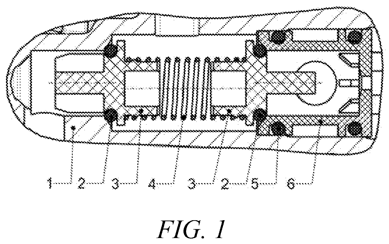

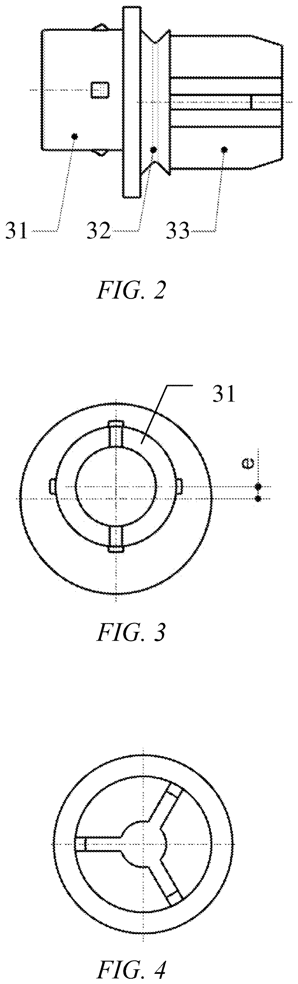

Fig. 1 is a sectional view of an eccentric noise-reduction two-way check valve according to an embodiment of the present invention. As shown in Fig. 1, the structure of the two-way check valve includes: a housing 1; an eccentric valve body 3 mounted in the housing 1, the eccentric valve body 3 including a push element fixing seat 31; and a push element 4 (including but not limited to a spring), the push element 4 being mounted on the push element fixing seat 31 (shown in Fig. 2), and the push element 4 being constructed to push the eccentric valve body 3 in a direction in which the two-way check valve is closed, where the push element fixing seat 31 is arranged to be eccentric relative to the housing 1.

Optionally, the two-way check valve includes a valve seal 2 disposed between the eccentric valve body 3 and the housing 1. The valve seal 2 includes, but is not limited to, an O-ring.

Optionally, the two-way check valve includes a housing insert 6 disposed in the housing 1.

Optionally, the two-way check valve includes a valve seal 2 disposed between the eccentric valve body 3 and the housing insert 6. The valve seal 2 includes, but is not limited to, an O-ring.

Optionally, the two-way check valve includes an insert seal 5 disposed between the housing 1 and the housing insert 6. The insert seal 5 includes, but is not limited to, an O-ring.

Optionally, the eccentric valve body 3 includes a guide seat 33 (shown in Fig. 2) used for guiding in the housing 1.

Optionally, as shown in Fig. 2, the eccentric valve body 3 includes a sealing structure 32 between the guide seat 33 and the push element fixing seat 31. The sealing structure 32 includes, but is not limited to, being constructed as a groove to fit with the valve seal 2.

Optionally, the push element fixing seat 31 includes a hollow portion.

Fig. 3 is a schematic diagram of the cross-sectional shape of a push element fixing seat of the eccentric valve body of the two-way check valve according to an embodiment of the present invention. As shown in Fig. 3, the cross-sectional shape of the push element fixing seat 31 includes, but is not limited to, a circle, an oval, a quincunx, a polygon, etc.

Fig. 4 is a schematic diagram of the cross-sectional shape of a guide seat of the eccentric valve body of the two-way check valve according to an embodiment of the present invention. As shown in Fig. 4, the cross-sectional shape of the guide seat 33 includes, but is not limited to, a Y shape, a cross, a quincunx, etc.

Two insert seals 5 are shown in Fig. 1. However, the number of the insert seals 5 may be 1. Preferably, the number of the insert seals 5 is 2 or more.

Optionally, the two-way check valve is used in a vehicle brake system.

The working principle of the two-way check valve is as follows:
1. When the two-way check valve is in an off-working state (no air input on either side or pressure balance on both sides), the sealing between the housing 1 and the guide seat 33 is realized by means of the valve seal 2, thereby preventing air from flowing back reversely.
2. When the two-way check valve is in a working state (both sides have air input, and a pressure difference between an input end and an output end is greater than an opening pressure), the eccentric valve body 3 is subjected to the action of air pressure, and two sides of the check valve are opened to allow normal flowing of air. When pressure on both sides of the two-way check valve reaches a balance or there is no air input, the two-way check valve is closed again.

The natural frequency of the two-way check valve is changed due to a certain eccentric distance e (shown in Fig. 3) between the push element fixing seat 31 of the eccentric valve body 3 and the housing 1 (or the guide seat 33). When the two-way check valve is opened, the eccentric valve body 3 is subjected to the action of air pressure to compress the push element 4 by force. Moreover, due to a certain eccentric distance e between the push element fixing seat 31 of the eccentric valve body 3 and the housing 1 (or the guide seat 33), the push element 4, in addition to being compressed by an axial action, is also subjected to bending under the action of a bending moment. The bending of the push element 4 causes a central axis of the push element fixing seat 31 of the eccentric valve body 3 to form an included angle with a central axis (or line of force) of the housing 1 (or the guide seat 33), thereby changing the path and flow rate of air passing through the two-way check valve and realizing the change in airflow state of the two-way check valve. The change in natural frequency and airflow state of the two-way check valve reliably avoids abnormal noise caused by the resonance with the airflow in the working state. Compared with the existing solution, the present invention can quickly eliminate abnormal noise with lower costs, without adding additional parts.

The above specific implementations do not constitute a limitation on the scope of the present invention. It should be appreciated by those skilled in the art that various modifications, combinations, sub-combinations and substitutions may be made depending on design requirements and other factors. Any modifications, equivalent substitutions, improvements, etc. made within the spirit and principles of the present invention shall fall into the scope of protection of the present invention.

## Claims

1. An eccentric noise-reduction two-way check valve, **characterized by** comprising:
a housing (1);
an eccentric valve body (3) mounted in the housing (1), the eccentric valve body (3) comprising a push element fixing seat (31); and
a push element (4), the push element (4) being mounted on the push element fixing seat (31), and the push element (4) being constructed to push the eccentric valve body (3) in a direction in which the two-way check valve is closed,
wherein the push element fixing seat (31) is arranged to be eccentric relative to the housing (1).

2. The eccentric noise-reduction two-way check valve according to claim 1, **characterized in that** the two-way check valve comprises a valve seal (2) disposed between the eccentric valve body (3) and the housing (1).

3. The eccentric noise-reduction two-way check valve according to claim 1, **characterized in that** the two-way check valve comprises a housing insert (6) disposed in the housing (1).

4. The eccentric noise-reduction two-way check valve according to claim 3, **characterized in that** the two-way check valve comprises a valve seal (2) disposed between the eccentric valve body (3) and the housing insert (6).

5. The eccentric noise-reduction two-way check valve according to claim 3, **characterized in that** the two-way check valve comprises an insert seal (5) disposed between the housing (1) and the housing insert (6).

6. The eccentric noise-reduction two-way check valve according to claim 2, **characterized in that** the eccentric valve body (3) comprises a guide seat (33) used for guiding in the housing (1).

7. The eccentric noise-reduction two-way check valve according to claim 6, **characterized in that** the eccentric valve body (3) comprises a sealing structure (32) between the guide seat (33) and the push element fixing seat (31).

8. The eccentric noise-reduction two-way check valve according to claim 7, **characterized in that** the sealing structure (32) is constructed as a groove to fit with the valve seal (2).

9. The eccentric noise-reduction two-way check valve according to claim 2 or 4, **characterized in that** the valve seal (2) is an O-ring.

10. The eccentric noise-reduction two-way check valve according to claim 5, **characterized in that** the insert seal (5) is an O-ring.

11. The eccentric noise-reduction two-way check valve according to any one of claims 1 to 8, **characterized in that** the push element fixing seat (31) comprises a hollow portion.

12. The eccentric noise-reduction two-way check valve according to any one of claims 1 to 8, **characterized in that** the cross-sectional shape of the push element fixing seat (31) is a circle, an oval, a quincunx or a polygon.

13. The eccentric noise-reduction two-way check valve according to any one of claims 6 to 8, **characterized in that** the cross-sectional shape of the guide seat (33) is a Y shape, a cross, or a quincunx.

14. The eccentric noise-reduction two-way check valve according to any one of claims 1 to 8, **characterized in that** the push element (4) is a spring.

15. The eccentric noise-reduction two-way check valve according to claim 5 or 10, **characterized in that** the number of the insert seals (5) is 2 or more.

16. The eccentric noise-reduction two-way check valve according to any one of claims 1 to 8, **characterized in that** the two-way check valve is used in a vehicle brake system.
